Europäisches Patentamt

European Patent Office

Office européen des brevets

(11) Publication number: **0 275 156**
**A1**

## (12) EUROPEAN PATENT APPLICATION

(21) Application number: **88300133.1**

(22) Date of filing: **08.01.88**

(51) Int. Cl.⁴: **C 04 B 20/02**
C 04 B 16/06, C 04 B 16/02,
C 04 B 18/24, C 04 B 28/02,
B 28 B 1/52

(30) Priority: **10.01.87 GB 8700536**

(43) Date of publication of application:
**20.07.88 Bulletin 88/29**

(84) Designated Contracting States:
**BE DE ES FR GB IT**

(71) Applicant: **Excel Industries Limited**
**13, Rassau Industrial Estate Ebbw Vale**
**Gwent NP3 5SD (GB)**

(72) Inventor: **Hampshire, John Holden**
**6, Derwen fawr**
**Crickhowell Powys, NP8 1BT (GB)**

(74) Representative: **Wynne-Jones, John Vaughan et al**
**Wynne-Jones, Lainé & James 22, Rodney Road**
**Cheltenham Gloucestershire GL50 1JJ (GB)**

(54) **Dry milled fibre cement products.**

(57) A cement-fibre product is manufactured by preparing fibres from a base cellulose stock such as wastepaper, which is first broken up into small pieces in a shredder and then distingrated in a dry hammer mill (Fig.1) such that the fibres are fibrillated. The fibres are mixed with a cement water slurry and the water then dried off leaving a laminated wet web on a porous support which is then allowed to cure and harden. Synthetic organic fibres such as PVA$_c$ may also be incorporated.

FIG. 1.

## Description

### Dry Milled Fibre Cement Products

This invention relates to the manufacture of fibre-cement products as used to replace conventional asbestos-cement materials. Asbestos fibres are used as re-inforcement and to improve mechanical properties such as impact strength, and the fibres also provide a useful function to support the cement particles in the wet slurry and to allow the water to drain off during manufacture.

Asbestos fibres are however unacceptable in many products and applications on account of the known danger to health which can arise. Accordingly it is an object of the invention to provide an improved cement product which will not suffer from the problems involved with asbestos and surprisingly it has been found that it is possible to produce an excellent re-inforced fibre cement product using organic fibres which are prepared in a dry state before adding the mixture with the ce:ment powder or slurry.

Broadly stated the invention consists in a cement-fibre product in which the fibre content comprises organic fibres prepared by a dry milling process.

Preferably the fibres are cellulose, for example recycled or reconstituted cellulose pulp. Conveniently the cellulose pulp is derived from newsprint or other waste paper. The fibres are preferably treated in a hammer mill and they may have a length of between 0 and 3 mm, preferably between 0.5 and 2.0 mm. The"freeness"of the fibres is preferably in the range of 45° - 75° SR (Shopper-Riegler).

In any case it is highly advantageous that the fibres should be fibrillated.

From another aspect the invention consists in a method of manufacturing a fibre-cement product in which a fibrous material is prepared from base stock comprising paper or paper based material, and is subjected to a dry hammer process causing fibrillation, cement with a suitable liquid is intermixed with the fibres, the liquid is partly drained off and the resulting material is allowed to set to form a fibre re-inforced product.

The invention may be performed in various ways and one embodiment will now be described by way of example with reference to the accompanying drawings in which:

Figure 1 is a diagram of a dry hammer mill suitable for use in preparing fibres for the invention,

Figure 2 is a perspective view of the mill, and

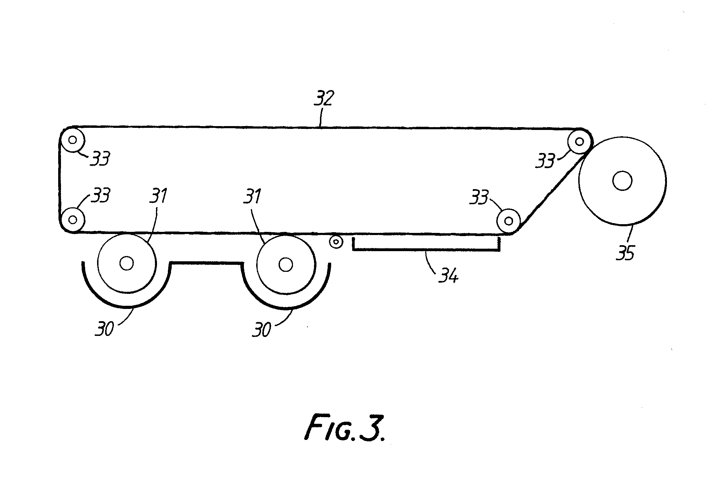

Figure 3 is a diagram of a plant for building up successive layers of the fibre slurry material to form the final product.

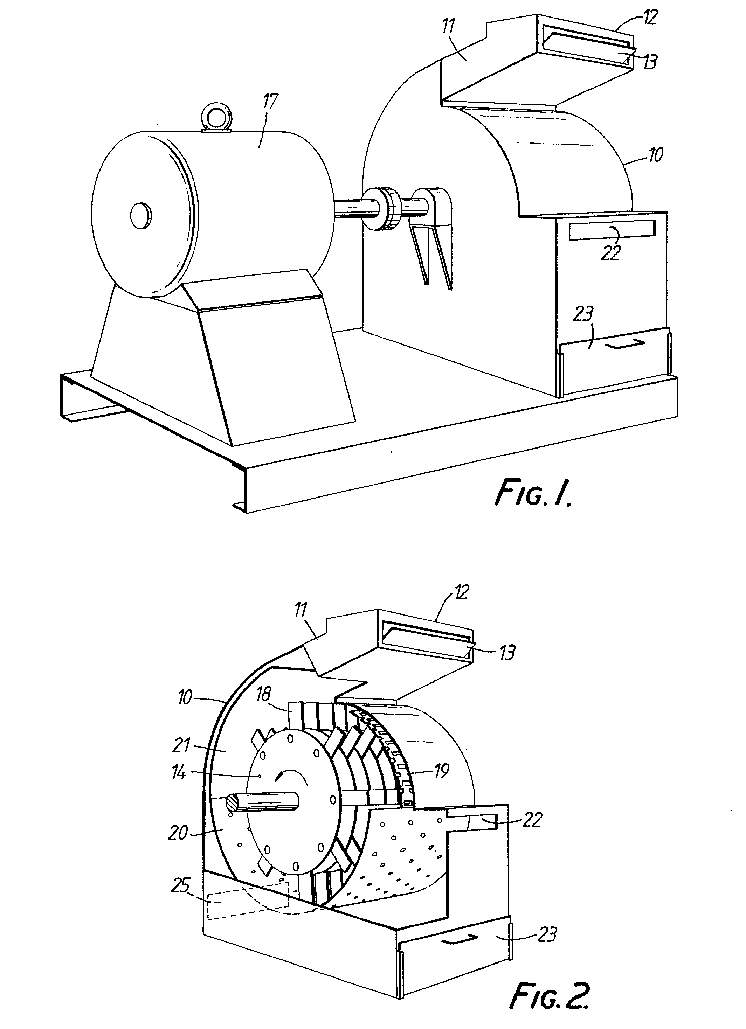

In this example the base stock material comprises either a virgin cellulose pulp or recycled/re-constituted cellulose such as waste newsprint. This base material is first broken up into small portions having an overall size between about 5 mm square and 20 mm square. This initial breaking down may be performed for example in a conventional shredder. The resulting broken up material is then delivered to a hammer mill of the general type illustrated in Figures1 & 2. In this particular machine the hammer mill comprises a casing 10 having an entry chute 11 with an inlet opening or table 12 and a feed damper 13. Within the casing is a rotary element comprising a hub 14 driven via a coupling from a driving motor 17. The hub supports the individual hammers 18 which co-operate with the cutting plate 19, screen 20, and back plate 21. The speed of operation in this particular machine is between 1500 and 3000 r.p.m and the hammer tip speed is approximately 2200 f.p.m at 3000 r.p.m. The screen diameter is approximately 30 inches and the screen aperture size may vary from approximately 50 mm down to about 1mm. The screen area may be between about 1000 and 2000 square inches and the hammer size is preferably between about $1/4"x2"x7^1/4"$ and $1/2"x2"x7^1/4"$.

The rate of flow through the hammer mill is important and can vary considerably being dependent on the type of mill, and size, screen size and type of fibre, and whether chemical additives are included. For example if inorganic chemicals are added as grinding aids the volumetric throughput will be altered radically. Typical feed rates are between about 3 and 5 tonnes/hour. The hammer mill also includes means for introducing vent air through an upper air vent 22 and a lower inlet controlled by a vent slide 23 and the resulting pulverised separated fibres are removed from the base of the mill at 25. Surprisingly the fibres so produced when examined under an electron microscope have a fibrillated appearance

The resultant fibre material is intermingled with a cement-water slurry and then the fibre cement-slurry mixture is worked up into the required product. In this working up process, as illustrated in Figure 5, the fibre cement slurry is first introduced into a pair of "stuff chests" 30 each containing a rotary cylindrical sieve 31. A press web 32, formed for example of felt, is driven in a continuous loop over rollers 33 and over the revolving sieves 31, which pick-up the fibre cement from the chests and transfer it onto the felt web where it is dewatered by suction as it passes over the suction box 34. The fibre cement is then transferred onto the forming bowl 35 where the sheets are built up to the required thickness.

In this work-up process the fibre properties are most important. The fibre properties determine the filtration characteristics and also the degree of retention of fibre and cement. The drainage properties can be determined and specified by the rate at which water drains from the fibre cement sheet before the cement is cured. This drainage value can be measured by the so called Canadian Standard Freeness test or the Schopper-Reigler (SR) test. Preferably the freeness value is between 45° and 75° (SR).

After a proportion of water has been drained off the laminated "wet" product is removed, placed on a flat or shaped table or support, and allowed to cure, to form the final fibre-cement article, which surprisingly has great strength, and adequate fire resistance, despite the total absence of asbestos or other inorganic fibres.

By comparison with the fibrillated appearance of fibres produced by a dry mill process the appearance of fibres resulting from treatment in a wet hammer mill is clearly and unmistakably unfibrillated.

In some cases it may be of advantage to incorporate into the product a proportion of synthetic organic fibres such as PVA (polyvinylacetate). It is found that this improves the impact resistance of the final product. The length of these synthetic fibres should be considerably greater than the cellulose fibres derived from the dry milling process.

## Claims

1. A cement-fibre product in which the fibre content comprises organic fibres prepared by a dry milling process.

2. A cement-fibre product according to Claim 1, in which the fibres are cellulose.

3. A cement-fibre product according to Claim 2, in which the fibres are derived from recycled or reconstituted cellulose pulp.

4. A cement-fibre product according to Claim 3, in which the cellulose pulp is derived from newsprint or other waste paper.

5. A cement-fibre product as claimed in any of the preceding claims, in which the fibres are treated in a hammer mill.

6. A cement-fibre product as claimed in any of the preceding claims in which the fibres have a diameter of between 0 and 1 mm, preferably between 0.5 and 1.5 mm.

7. A cement-fibre product as claimed in any of the preceding claims in which the fibres have a length of between 0.3 and 3 mm.

8. A cement-fibre product according to Claim 7, in which the length of the fibre is between 0.5 and 2.0 mm.

9. A cement-fibre product according to any of the preceding claims, in which the fibre content includes both natural and synthetic organic fibres.

10. A cement-fibre product according to Claim 9, in which the fibre content includes cellulose fibres and fibres of any synthetic plastics material.

11. A cement-fibre product as claimed in any of the preceding claims, in which the fibres are fibrillated.

12. A method of manufacturing a fibre-cement product in which a fibrous material is prepared from base cellulose stock comprising paper or paper b ased material, and is subjected to a dry hammer process causing fibrillation, cement with a suitable liquid is intermixed with the fibres, the liquid is partly drained off, and the resulting product is allowed to set to form a fibre reinforced product.

13. A fibre-cement product substantially in any of the forms described herein.

14. A method of manufacturing a fibre-cement product substantially as described herein.

FIG. 1.

FIG. 2.

0275156

FIG.3.

| DOCUMENTS CONSIDERED TO BE RELEVANT | | | EP 88300133.1 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | AT - B - 284 695 (GREFCO, INC.) <br> * Page 3, lines 17-23; page 4, lines 43-46; page 5, lines 19-23; page 7, line 51 - page 8, line 22 * <br> -- | 1-7,8-12 | C 04 B 20/02 <br> C 04 B 16/06 <br> C 04 B 16/02 <br> C 04 B 18/24 |
| X | AT - B - 355 486 (ETERNIT-WERKE LUDWIG HATSCHEK & CHEMIEFASER LENZING AKTIENGESELLSCHAFT) <br> * Claims; examples 2,4-8,11,14 * <br> -- | 1,2,9-12 | C 04 B 28/02 <br> B 28 B 1/52 |
| Y | US - A - 2 428 100 (SOULEN) <br> * Column 1, lines 1-3,12-15 * <br> -- | 1-5 | |
| Y | EP - A2 - 0 168 991 (PILKINGTON BROTHERS P.L.C.) <br> * Claims * <br> -- | 1-3,9,12 | |
| A | DE - A1 - 2 854 967 (PARAISTEN KALKKI OYPARGAS KALK AB) <br> * Claims * <br> ---- | 1-4,8-12 | |

**TECHNICAL FIELDS SEARCHED (Int. Cl.4)**

C 04 B
B 28 B
B 32 B

~~The present search report has been drawn up for all claims~~

| Place of search | Date of completion of the search | Examiner |
|---|---|---|
| VIENNA | 13-04-1988 | BECK |

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☒ Only part of the claims fees have been paid within the prescribed time limit. The present European search report has been drawn up for the first ten claims and for those claims for which claims fees have been paid,

namely claims: 11-12

☐ No claims fees have been paid within the prescribed time limit. The present European search report has been drawn up for the first ten claims.

---

## LACK OF UNITY OF INVENTION

The Search Division considers that the present European patent application does not comply with the requirement of unity of invention and relates to several inventions or groups of inventions,

namely:

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims: